Europäisches Patentamt

European Patent Office

Office européen des brevets

(11) Publication number: **0 420 215 A2**

# EUROPEAN PATENT APPLICATION

(21) Application number: **90118510.8**

(22) Date of filing: **26.09.90**

(51) Int. Cl.⁵: **G11B 7/00, G11B 27/36, G11B 19/04**

(30) Priority: **29.09.89 JP 252196/89**

(43) Date of publication of application:
**03.04.91 Bulletin 91/14**

(84) Designated Contracting States:
**DE FR GB NL**

(71) Applicant: **Kabushiki Kaisha Toshiba**
**72, Horikawa-cho Saiwai-ku**
**Kawasaki-shi(JP)**

(72) Inventor: **Yokota, Tsuneshi, c/o Intellectual**
**Property Div.**

**Kabushiki Kaisha Toshiba, 1-1 Shibaura**
**1-chome**
**Minato-ku, Tokyo 105(JP)**
Inventor: **Takeuchi, Ryoji, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) **Apparatus for optically recording information on a recording medium.**

(57) In an apparatus for optically recording information on an information recording medium, information is recorded on the recording medium, upon recording of that information, by directing to the recording medium a laser beam which is intensity modulated in accordance with a to be recorded data and the data is read or eliminated from the recording medium, upon reproduction or elimination of the data, by directing to the recording medium a laser beam of a desired intensity which is maintained constant.

This type of recording apparatus undergoes an oscillation, etc., at a recording medium during the recording of information, sometimes destroying already recorded data. An apparatus according to the present invention can prevent information destruction by normally monitoring a laser beam reflected back from the recording medium and detecting recorded information in the recording medium.

F I G. 1

EP 0 420 215 A2

# APPARATUS FOR OPTICALLY RECORDING INFORMATION ON A RECORDING MEDIUM

The present invention relates to an apparatus for recording information and, in particular, an apparatus for optically recording information on a recording medium which is utilized on an optical filing system, etc.

In an information recording apparatus or optical disk apparatus, a laser beam is directed to an information recording medium or an optical disk so as to enable information to be recorded on the optical disk and to be read out from the optical disk.

In general, this type of apparatus includes an optical disk recorded with information, a laser diode for generating a laser beam for data recording or reproduction, and an optical device for allowing the laser beam to focus at a spot on the optical disk and a laser beam which is reflected on the spot to be conducted thereto.

The apparatus of this type reads out recorded data from the optical disk with a laser beam of a given intensity produced from a laser and writes it into the optical disk in an ON/OFF fashion in accordance with information to be recorded.

In this case, there is a risk that, upon the illumination of the optical disk with a laser beam of an intensity exceeding a predetermined level, spurious data will be recorded on the optical disk or will destroy those data items already recorded on the optical disk due to an overwriting.

Published unexamined Japanese Patent Disclosure 61-258335 discloses the technique for preventing a simultaneous read/write operation relative to an optical disk, upon the recording of data on the optical disk, so as to prevent such the overwrite and interrupt a new data entry if any such already recorded data is detected in that new data.

In the method disclosed in the Japanese Patent Disclosure 61-258335, a detection error and detection leakage occur in the case where a laser beam is not enough great in recording intensity to be reflected from those already recorded data items in the optical disk or in the case where a laser beam is not enough great in intensity upon reflection, due to an oscillation of the optical disk or focusing error, etc. It is thus not possible to positively prevent an overwritting.

An object of the present invention is to provide an information recording apparatus capable of positively preventing an overwriting.

Another object of the present invention is to provide an information recording apparatus capable of positively detecting already recorded data during the recording of new data in an optical disk.

Still another object of the present invention is to provide an information recording apparatus of high reliability.

According to the present invention, there is provided an apparatus for recording information on a recording medium comprising: means for emitting a light beam toward the recording medium; means for detecting the light beam which is reflected from the recording medium and for generating a detecting signal having a level; means for comparing the level of the detecting signal with a first reference level to produce a first comparison signal; second comparing means for comparing the level of the detecting signal with a second reference level, which is smaller than the first reference level, to produce a second comparison signal; and means, comparing a sum of the first and second comparison signals with a previously stored a reference signal, for stopping the emitting means when the sum of the first and second comparison signals falls within a predetermined range.

This invention can be more fully understood from the following detailed description when taken in conjunction with the accompanying drawings, in which:

Fig. 1 is a schematic view generally showing an apparatus according to one embodiment of the present invention;

Fig. 2 is a diagrammatic view showing a state of recorded data in a recording medium as used for the apparatus shown in Fig. 1;

Figs. 3A and 3B are graphs showing an output of a recording laser beam reflected from a recording medium when an off-tracking occurs upon recording of data in the recording medium; and

Fig. 3C is a graph showing a timing pulse waveform as employed to record or reproduce data shown in Fig. 2.

One embodiment of the present invention will be explained below in more detail with reference to the accompanying drawings.

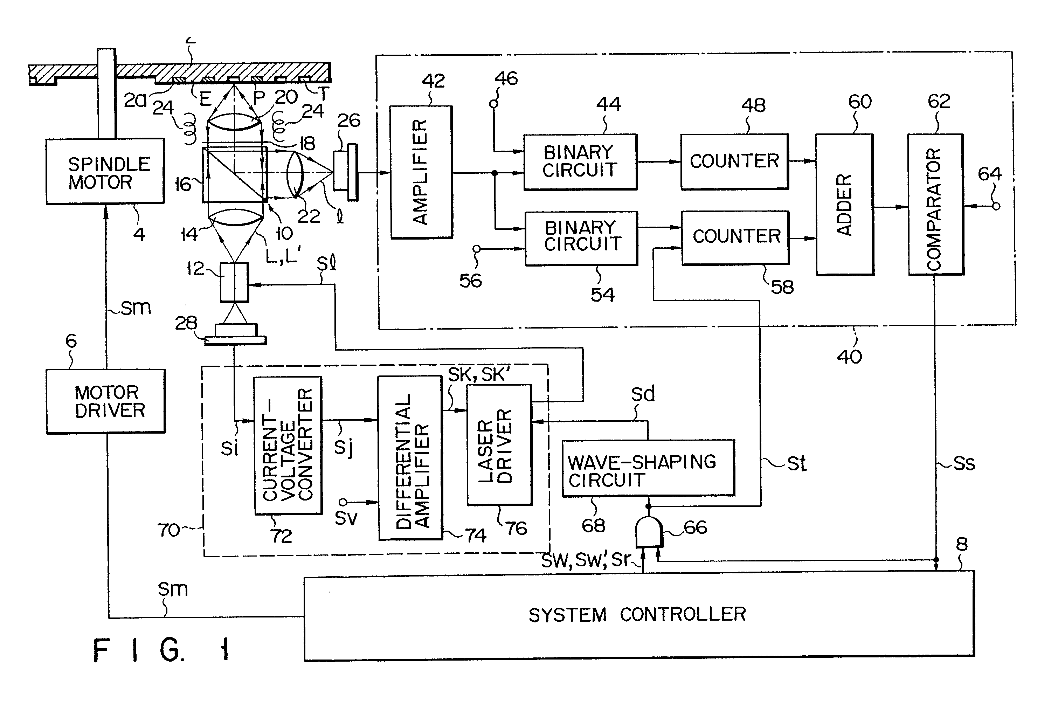

In Fig. 1 the apparatus includes an optical disk 2 recorded with information, a laser diode 12 for generating a laser beam L utilized for recording or reproducing data and an optical head 10 for focusing the laser beam L at the optical disk 2 and conducting it to an optical detector 26 after being reflected back on the optical disk 2. Further, the apparatus includes a laser beam controller 70 for converting information data which is to be recorded on the optical disk 2 to an optical signal, a data reading section 40 for reading out a laser beam $\ell$ which has been reflected on the optical disk 2 and detected by the optical detector 26 and for detecting a overwriting, off-tracking, etc., an information reproducing section, not shown, which reproduces information with the use of the information data, a predetermined motor 4 for rotating the optical disk 2 at a predetermined speed, and a system controller 8 for controlling these electrical circuits.

The optical disk 2 is formed by coating or evaporating a metal film E, such as tellurium or bismuth, on the surface of a disk-like substrate formed of, for example, glass or plastics. The optical disk 2 has concentric tracks T on its metal-coated surface 2a to allow data to be recorded thereon or read out therefrom. The data write/read operation is performed by focusing a laser beam L on the access track T on the optical disk as will be set out below. It is to be noted that information recorded on the optical disk 2 is converted via an external apparatus, such as a scanner, word processor, to an electric signal and input to the optical disk apparatus. The laser beam L, on the other hand, is intensity modulated to recording data in accordance with the input information. The recording data corresponding to information is written on the optical disk 2, that is, the recording data is reserved as the presence or absence of pits P on the recording track T on the optical disk 2. The recorded data is read out of the optical disk 2, reproduced by an information reproducing circuit, not shown, and visually output on a CRT or a printer.

The optical disk 2 is rotated by a spindle motor 4 at a predetermined speed. The motor 4 is rotated via a motor driver 6 in accordance with a motor drive signal Sm output from the system controller 8, that is a drive signal for turning the motor ON/OFF or setting the number of rotations of the motor to a desired value. The system controller 8 supplies control signals for data recording or reproduction and for the movement of the optical head 10, such as focusing or tracking. Further, the controller 8 supplies a timing signal to an associated circuit, as will be set out below, starts a recording and reproduction operation, ends it, detects a double recording and instructs the starting, stopping, etc., of the apparatus.

In the recording apparatus, the optical head 10 is located opposite the metal-coated surface 2a of the optical disk to allow the laser beam L to focus at the metal-coated surface 2a of the optical disk and the laser beam $\ell$ which is reflected on the metal-coated surface 2a to be conducted to the optical detector 26. Generally, the optical disk 2 is exchangeable for another optical disk and, upon being set in the recording apparatus, is inserted into a predetermined location with its metal-coated surface 2a arranged opposite the optical head 10.

The optical head 10 includes, as an integral unit, a collimator lens 14 for collimating a laser beam L generating from the laser diode 12, a polarization beam splitter 16 for splitting a laser beam L directing at the optical disk 2 and a laser beam $\ell$ reflected from the optical disk 2, a 1/4 wavelength plate 18 for rotating a polarization plane of the laser beam L at a 45°, an object lens 20 for focusing the laser beam L at the metal-coated surface 2a of the optical disk and for conducting reflected laser beam $\ell$ to the beam splitter 16. The optical head 10 further includes, a focusing lens 22 for allowing the laser beam $\ell$ which is separated at the beam splitter 16 to focus at the optical detector 26, and a voice coil 24 for moving the object leans 20 in any desired direction, such as an up/down or right/left direction, to allow the laser beam L which focuses at the metal-coated surface 2a of the optical disk to be maintained at a focused state. In addition, the optical head 10 having the above structure is integrally provided with the aforementioned laser diode 12, a monitor diode 28 for monitoring the output of the laser diode 12 and the aforementioned optical detector 26. Between the beam splitter 16 and the focusing leans 22 are arranged, for example, optical elements for focusing detection, not shown, such as a cylindrical lens or knife edge.

The optical head 10 is movable in a radial direction of the optical disk 2 and follows the recorded track T, that is, an object to be data-recorded or-read out, via an optical head moving mechanism such as a linear motor (not shown), in accordance with an instruction from the system controller 8.

A laser beam L which is emitted as a divergent beam from the laser diode 12 is converted by the collimator lens 14 to a parallel laser beam L and conducted to the beam splitter 16. The beam splitter 16 allows the laser beam L to be transmitted therethrough or reflected thereon through the utilization of a linear polarization inherent in the laser beam L. Usually, the beam splitter 16 in the optical head 10 has its polarization so directed as to allow a laser beam L which is produced from the laser diode 12 to be transmitted therethrough and a laser beam $\ell$ which is reflected from the optical disk 2 to be separated from the laser beam L. The laser beam L which is conducted toward the beam splitter 16 passes through the beam splitter and 1/4 wavelength plate 18 and is 45° rotated in its polarization direction and then conducted to the object lens 20. The laser beam L is focused on and at the metal-coated surface 2a of the optical disk.

In a recording, the laser beam L has a predetermined intensity and is turned ON and OFF by a beam modulation circuit, not shown, in accordance with recording data prepared based on information to be recorded. In a reproduction, a laser beam L′ is generated which has a predetermined intensity weaker than that of the laser beam utilized upon recording. The laser beam $\ell$ reflected from

the optical disk 2 is again converted by the object lens 20 to a parallel laser beam $\ell$, 45° rotated in its polarization direction and returned back to the beam splitter 16. The polarization of the reflected laser beam $\ell$ is 90° rotated by the passage of the 1/4 wavelength plate again, separated on the beam splitter 16 and conducted to the optical disk 26.

In the optical head 10, an object lens movement mechanism as will be set out below is located at the object lens 20 so as to enable a beam spot of the laser beam to be imaged normally as a minimum beam spot at the metal-coated surface 2a of the optical disk, that is, to enable the object lens 20 to be maintained at a just-in-focus state times relative to the optical disk 2, upon writing or reading out of data on or from the optical disk 2. The object lens 20 is moved on the optical axis by supplying a focusing control signal to the object lens movement mechanism or voice coil 24 via a focusing detection circuit, not shown. The voice coil 24 is movable in a direction perpendicular to the optical axis and is moved in that direction upon receipt of a tracking control signal via a tracking detection circuit, not shown, so as to enable a beam spot of the laser beam L to exactly follow the recording track T of the optical disk at all times, that is, to enable the object lens 20 to be maintained in a just-on-track state at all times relative to the optical disk 2.

That laser beam $\ell$ separated by the beam splitter 16 is focused, by the focusing lens 22, at the optical detector 26 where it is photoelectrically converted. The output of the optical detector 26 is supplied to binary circuits 44 and 54 via an amplifier 42.

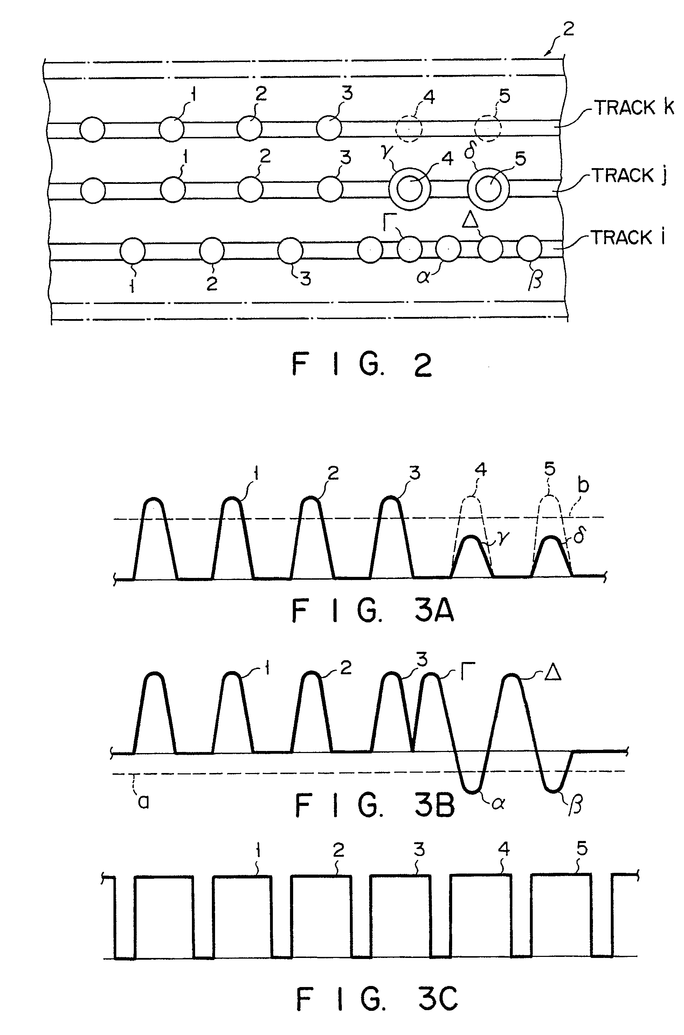

The binary circuit 44 is composed of a comparator for transforming an analog output of the amplifier 42 to a binary counterpart with the use of a predetermined threshold level (a level a as shown in Fig. 3B), that is, for comparing the level a input from a threshold level input terminal 46 with the output of the amplifier 42 to provide a binary signal. The level a, which is input from the input terminal 46, corresponds to a desired value for determining the presence or absence of pits P in the recording track T of the optical disk 2. The level a is set lower than an analog output corresponding to the laser beam $\ell$ reflected from any of the non-recorded pits 1, 2 or 3, for instance (shown in Fig. 3B), and set higher than an analog output corresponding to the laser beam $\ell$ reflected from any of the recorded pits $\alpha$ or $\beta$, for instance (shown in Fig 3B), corresponding to recording areas defined in synchronism with a recording pulse Sd. In the recorded pits $\alpha$ or $\beta$, the reflectivity of the metal-coated surface 2a is varied by an exposure with the laser beam L. In this connection it is to be noted that the signal as set out above in connection with the determination level a represents data recorded in the optical disk 2 and is supplied to an information reproducing circuit, not shown, for information reproduction.

The binary circuit 54 is composed of a comparator for transforming an analog signal which is output from the amplifier 42 to a binary signal upon receipt of a desired threshold level as indicated by a determination level b in Fig. 3A and adapted to provide a binary signal upon comparison between the determination input level b input from the threshold level input terminal 56 and the output of the amplifier 42. The level b, which is input from the input terminal 56, is set lower than a reflection signal level of a laser beam L used for forming pits 1, 2 or 3 (shown in Fig. 3A) in a nonrecorded track T of the optical disk 2, i.e., recording data in an unused track T. The level b is further set at a desired value higher than the reflection signal level of the laser beam L used for recording of data in a recorded track T in an overwrite fashion, since reflectivity will be largely reduced when upon the recording of data over pits 4 or 5 (shown in Fig. 3A) in a recorded track T in an overwrite fashion. In this connection it is to be noted that the aforementioned signal indicates that a overwrite occurs, and is utilized to stop the recording of data as will be set out below.

The output of the binary circuit 44 is counted by a counter 48 and supplied to an adder 60. The output signal of the binary circuit 54, together with a timing pulse St as will be set out below, is input to a counter 32. The counter 32 counts a logical signal of a product of the output signal of the binary circuit 54 and timing pulse St of a wave shaping circuit 68 in the laser beam controller 70 and delivers an output signal to the adder 60. The adder 60 adds together the outputs of the counters 48 and 58 and supplies a result of addition to a comparator 62 where the output of the adder 60 is compared with the predetermined level c of the input terminal 64. A write-inhibiting signal Ss is delivered to the system controller 8 when the output of the adder 60 is greater than the level c.

The write-inhibiting signal Ss is also delivered to an AND circuit 66. The AND circuit 66 receives, as a first input, a recording pulse Sw corresponding to recording data entered from the external apparatus such as a scanner and word processor (not shown), via the system controller 8 and, as a second input, the write-signal Ss. The AND circuit 66 delivers a timing pulse St to the counter 58 for write-inhibiting/execution. The timing pulse St is supplied to the wave shaping circuit 68 where it is wave shaped. The wave-shaped output of the wave shaping circuit 68 is delivered to a laser driver 76 in the laser beam controller 70 and functions as a beam modulation signal for turning a laser beam ON and OFF.

The determination level c is determined as will be set out below. The optical disk 2 has its data-recorded surface 2a covered with a metal film E. There is sometimes a case where a defect of the metal film per se, called a pinhole, may occur at a manufacturing step or depending upon its reservation state. If such a pinhole is frequently detected, an overwrite detection signal is often produced, so that recording failure might occurs. Therefore, the lower limit of the level c is set to be somewhat larger than a maximum range of an allowance for a structural defect, such as a pinhole in the optical disk 2, while the upper limit of the level c is selected depending upon an error correction capability of the present apparatus, such as the optical filing system using the optical disk 2. Stated in another way, the upper limit as already set out shows that, if a overwrite should occur, the write inhibiting signal needs to be generated in a range in which data destroyed by the overwrite can be repaired by an error correction circuit, not shown. As will be appreciated from the above, the level c is set to be somewhat larger than the maximum range of an allowance for a structural defect, such as a pinhole, in the optical disk 2 and to be smaller than the aforementioned data-repairable range.

The monitor diode 28 is located on a side opposite to that on which a light emitting surface of the laser diode 12 is formed, that is, on the rear light exit surface of the laser diode 12. The diode 28 monitors the intensity of a laser beam L produced from the laser diode 12 to deliver a corresponding laser beam as a monitor signal to the laser beam controller 70.

The laser beam controller 70 utilizes the monitor signal and imparts a feedback control to an output (laser beam L) of the laser diode 12 to allow the output of the laser diode 12 to be maintained constant at all times. Put it in another way, the monitor signal Si produced as an electric current signal from the monitor diode 28 is input to a current/voltage converter 72 where it is converted to a voltage signal Sj corresponding to the intensity of the laser beam L output from the laser diode 12. The output of the current/voltage converter 72 is supplied as a monitor voltage signal Sj to a first input terminal and a reference voltage signal Sv is fed from a constant voltage source for instance to a second input terminal of the differential AMP 74. The differential AMP 74 is compared with the monitor voltage signal Sj and the reference voltage signal Sv. A result of comparison is supplied as a difference signal Sk to a laser driver 76. The reference voltage signal Sv shows a constant voltage which needs to be maintained so that data in the optical disk 2 may be stably maintained. The monitor signal Sj which is output from the current/voltage converter 72 is so controlled as to be made equal to the reference voltage signal Sv. By so doing the laser beam L of the laser 12 has its intensity maintained constant.

A recording pulse Sd formed by the wave-shaping circuit 68 is supplied to the laser driver 76, the pulse Sd corresponding to data to be recorded in the optical disk 2. The difference signal Sk out of the differential AMP 74, together with the recording pulse Sd, is supplied to the laser driver 76. The laser driver 76 supplies a laser drive signal S$\ell$ to the laser diode 12 so that a laser beam L whose intensity is utilized for data recording or reproduction may be produced when a supply signal switching is made upon the recording or read out of data in or from the optical disk 2. Stated in another way, when an instruction Sr for reading out data recorded on the optical disk 2 is input from the system controller 8 to the laser driver 76, via wave-shaping circuit 68, the laser beam L which is output from the laser diode 12 has its intensity varied to that for read out and the laser diode 12 is driven in a manner to make the beam intensity constant at all times. While, when an instruction Sw for recording data in the optical disk 2 is input to the driver 76, via wave-shaping circuit 68, the laser beam L which is output from the laser diode 12 has its intensity changed to that for recording and is turned ON and OFF in accordance with the recording data. In the recording of data in the optical disk 2, a voltage signal Sk which is input to the differential AMP 74 is used as a monitor signal of the laser beam L produced from the laser diode 12 in which case a voltage signal Sk$'$ obtained by a voltage signal Sk at a just previous reproduction is sample held by a sample hold circuit, not shown, is regarded as an input signal from the current/voltage converter 72. In this connection it is to be noted that, for the recording, the laser beam L output from the laser diode 12 is feedback-controlled to be nearly equal in intensity to the laser beam L$'$ at the time of read out.

Writing or reproducing data in or from the optical disk 2 by an optical head 10 will be explained below in more detail.

A laser beam L is directed from the optical head 10 to the recording track T on the optical disk. Upon writing or reading data in or from the optical disk 2, the laser beam L is intensity modulated by the recording pulse Sd. The laser beam L is ON/OFF controlled, to form pits P in the metal-coated surface 2a of the optical disk in which case the formation of the pits leads to a decline in reflectivity of corresponding spots in the metal-coated surface 2a of the optical disk.

To be read out the recorded data from the optical disk 2, a laser beam L$'$ of a predetermined intensity is directed at the optical disk. If data is present in the corresponding spot, i.e., pits P, in the optical disk 2, then it is detected as a decline in the reflectivity of that spot and it is thus possible to detect the presence or absence of the pits P in the optical disk 2.

A laser beam L′ produced from the laser diode 12 travels past the optical splitter 16 in the optical head 10 to the object lens 20 where it is focused at the metal-coated surface 2a of the optical disk. The laser beam L′, after being reflected there, is returned back to the object lens 20 where it is converted to a parallel laser beam $l$. The reflected laser beam $l$ goes again back to the beam splitter 16. The reflected laser beam $l$ is reflected at the beam splitter 16 to be separated from that laser beam L′ directed toward the optical disk 2. The reflected laser beam $l$ is focused, by the focusing lens 22, at the optical detector 26 where it is photoelectrically converted to an analog signal. The analog signal is fed to the amplifier 42 where it is amplified to a predetermined level. The output signal of the amplifier 42 becomes an output current corresponding to the presence or absence pits P of in the optical disk 2 as shown in Fig. 3A or 3B. The output of the amplifier 42 is supplied to the binary circuits 44 and 54. As will be set forth below, Fig. 3A shows an output current in the case where, for the recording of data on a track k, an off-tracking occurs and a laser beam L follows a track j, while Fig. 3B shows an output current in the case where, for the recording of data on a track k, an off-tracking occurs and a laser beam L follows a track i.

A determination level a of a magnitude as shown in Fig. 3B supplied via the input terminal 46, together with the output current of the amplifier 42 is supplied to the binary circuit 44 to detect recorded pits α, β.

Stated in more detail, since the data is recorded in the metal coated surface 2a of the optical disk in synchronism with the recording puke Sd (see Fig. 3C), it follows that, upon the recording of data in the optical disk 2, the laser beam $l$ corresponding to a reflected replica of the recording laser beam L is detected by the optical detector 26 in synchronism with the recording pulse Sd. When the laser beam L reaches the pits α, β in the track i of the optical disk, the reflected replica of the laser beam L, i.e., the reflected laser beam $l$, upon recording is largely decreased, enabling an output current to be detected as being lower in level than the determination level a. It is thus possible to detect that the pits α, β have already been present in the optical disk 2. The binary circuit 44 delivers an output "1" when the output current of the amplifier 42 is smaller than the level a. The output of the binary circuit 44 is supplied to the counter 48 where a counting operation is performed. The output of the counter 48 is supplied to the adder 60.

On the other hand, the determination level b of a magnitude as shown in Fig. 3A supplied via the input terminal 56, together with the output of the amplifier 42, is supplied to the binary circuit 54, detecting that a double recording occurs over those recorded pits γ(4), δ(5). Put it in another way, since data is recorded in the metal-coated surface 2a of the optical disk in synchronization with the recording pulse Sd (see Fig. 3C) as already set out above, the reflected replica of the recording laser beam L, the reflected laser beam $l$ is detected by the optical detector 26 in synchronism with the recording pulse Sd at a time of recording. When the laser beam reaches those pits γ(4), δ(5) where an overwrite occurs, the reflected laser beam $l$ at a time of recording is decreased below its own original reflection level and it is possible to detect a lower output current than the level b. This means that a overwrite occurs at the pits γ(4), δ(5) in the optical disk 2. The binary circuit 54 delivers an output "1" to the counter 58 when the output current of the amplifier 42 is smaller in level than the level b. The output of the binary circuit 54, together with the timing pulse St from the AND circuit 66, is supplied to the counter 58 where a sum signal of the output of the binary circuit 54 and timing pulse St is counted. The output of the counter 58 is fed to the adder 60.

The adder 60 counts the number of data supplied from the binary circuit 44 and that supplied from the binary circuit 54. A result of addition is supplied to the comparator 62 where it is compared with the predetermined level c. When the result of addition at the adder 60 is increased over the level c, the comparator 62 delivers an output "0" or write inhibiting signal Ss to the AND circuit 66 where its one gate is closed. It is thus possible to shut off the timing pulse and hence to stop the recording of the data in the optical disk 2. The write inhibiting signal Ss is supplied to the system controller 8. The system controller 8 detects the occurrence of an off-tracking or overwriting upon receipt of the write inhibiting signal, produces an instruction, such as Sw′, for again writing data in the optical disk 2 and performs an operation for again writing data exactly in the recording area of the optical disk.

The off-tracking and overwriting of the data will be explained below in more detail.

When data items are to be written on a track k outside those tracks i and j already recorded with data as shown in Fig. 2, they are sequentially recorded on those areas corresponding to pits 1, 2, 3, 4 and 5 in synchronism with the recording pulse as shown in Fig. 3C. When an off-tracking occurs for some reason or other immediately after data is recorded at the pits 3, if a laser beam L effects a shift to the track j, those data items to be originally recorded on the pits 4, 5 on the track k are reorded on those areas corresponding to the pits 4, 5 on the track j, thus destroying the corresponding data recorded as the pits 4, 5 on the track j. In Fig. 2, those pits produced as a doubly recorded areas are indicated as pits γ, δ. Further, when a laser beam L follows the track i, data to be originally recorded as the pit 5 on the track k is newly recorded as a pit Δ on the track j at a location between the data areas corresponding to pits α, β on the track j. A similar thing can be said about the pit 4 in which case data is newly recorded as a pit Γ on the track i at a corresponding location.

When any overwrite occurs upon the recording of data on the track k, the reflected beam ℓ at a time of recording, that is a corresponding output current signal, which is detected by the optical detector 26 in synchronism with the recording pulse Sd, is such that, as shown in Fig. 3A, an output current signal corresponding to a laser beam ℓ reflected from each of the pits γ(4) and δ-(5) emerges as a lower than pits 1, 2 or 3. When, on the other hand, an off-tracking occurs upon the recording of data on the track k, an output current signal emerges as a very low one corresponding to a laser beam ℓ reflected from the pits α, β. In other words, in the former case or in the case as shown in Fig. 3A, the overwrite or data destruction can be detected since an output current of a laser beam reflected from the pits γ(4), δ(5) corresponding to the recording pulses 4, 5 is decreased below the determination level b. In the former case or in the case shown in Fig. 3B, the pits α, β corresponding to already recorded data α, β are detected to allow the detection of an off-tracking.

As set out above, according to the present invention it is possible to detect the intensity of a laser beam reflected on the optical disk and to determine whether or not any already recorded data is present at a location between the data recording areas. Even if any overwrite should occur upon the writing of data, it can be positively detected to prevent those data items which have been recorded on the optical disk from being destroyed. It is thus possible to provide an information recording apparatus of high reliability.

## Claims

1. An apparatus for recording information on a recording medium characterized by comprising:
means (12) for emitting a light beam toward the recording medium;
means (26) for detecting the light beam which is reflected from the recording medium and for generating a detecting signal having a level;
means (44) for comparing the level of the detecting signal with a first reference level to produce a first comparison signal;
second comparing means (54) for comparing the level of the detecting signal with a second reference level, which is smaller than the first reference level, to produce a second comparison signal; and
means (62), comparing a sum of the first and second comparison signals with a previously stored a reference signal, for stopping the emitting means when the sum of the first and second comparison signals falls within a predetermined range.

2. The recording apparatus according to claim 1, characterized in that the first comparison signal is produced by said first comparing means (44) when the level of the detecting signal is lower than the first reference level which is previously set slightly lower than those output currents that are obtained from the reflected light beam reflected from a non-information-recorded recording medium.

3. The recording apparatus according to claim 1, characterized in that the second companions signal is produced by said second comparing means (54) when the level of the detecting signal is higher than the second reference level which is previously set lower than those output currents that are obtained from the reflected light beam reflected from a non-information-recorded recording medium.

4. The recording apparatus according to claim 1, characterized in that the second comparison signal is produced by said second comparing means (54) when the level of the detecting signal is reversed in its polarity.

5. The recording apparatus according to claim 1, characterized in that said stopping means (8) stops the emission of the light beam when various values of the reflected light beam from the recording medium, which are caused by a structural defect in the recording medium, exceed a lower limit which allows recovery of the information.

6. The recording apparatus according to claim 1, characterized in that said stopping means (8) stops the emission of the light beam when various values of the reflected light beam from the recording medium almost coincide with an upper limit which is selected depending upon an error correction capability of the recording apparatus.

7. An apparatus for recording information on a recording medium characterized by comprising:
means (12) for emitting a light beam toward the recording medium, as a variable emission output, which is intensity modulated, upon recording of data, in accordance with data to be recorded and for emitting a light beam of a desired intensity, upon reproduction and elimination of data, which is maintained constant;
means (10), assembled integral with the emitting means, for separating from the light beam conducted toward the recording medium the light beam which is reflected from the recording medium;

means (40) for detecting the separated light beam to generate a detecting signal having a level, and for comparing the level of the detecting signal with a first reference level to produce a first comparison signal, the first reference level being previously set slightly lower than those output currents that are obtained from the reflected light beam reflected from a non-information-recorded recording medium, and further comparing the level of the detecting signal with a second level to produce a second comparison signal, the second reference level being previously set much lower than those output currents that are obtained from the reflected light beam reflected from the non-information-recorded recording medium; and

means (8) for adding together the first and second comparison signals outputted from said comparing means, and for comparing a result of the addition with a reference signal to stop the light beam emitted from said emitting means, the reference signal being defined between a first value among various values of the reflected light beam which are caused by a structural defect in the recording medium that exceeds a lower limit allowing recovery of the information and a second value among various values of the reflected light beam which almost coincides with an upper limit selected depending upon an error correction capability of the recording apparatus.

EP 0 420 215 A2

F I G. 1

F I G. 2

F I G. 3A

F I G. 3B

F I G. 3C